Europäisches Patentamt

European Patent Office

Office européen des brevets

(11) Publication number: **0 449 112 A1**

## (12) EUROPEAN PATENT APPLICATION

(21) Application number: **91104421.2**

(51) Int. Cl.5: **G01F 23/24**

(22) Date of filing: **21.03.91**

(30) Priority: **26.03.90 IT 341190**

(43) Date of publication of application:
**02.10.91 Bulletin 91/40**

(84) Designated Contracting States:
**AT BE CH DE ES FR GB GR LI LU NL**

(71) Applicant: **PIETRO FOGACCI S.r.l.**
**Via del Sostegno 2**
**I-40131 Bologna(IT)**

(72) Inventor: **Fogacci, Pietro**
**Via M. Polo 34**
**I-40131 Bologna(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) **Liquid level sensing device for steam boilers.**

(57) The liquid level sensing device for steam boilers includes a metallic probe (3) which is arranged inside the boiler (1) above heating means (2) of the boiler itself and is intended to be immersed in the liquid contained in the boiler, an electric circuit (8,9) which is connected, at its ends, to the probe (3) and to the structure (1) of the boiler and is suitable for being closed across the liquid contained in the boiler, control means (10) which are inserted on the electric circuit (8,9) and are suitable for generating a signal which is sent to the probe (3) and which can be detected by the control means (10) upon the opening of the circuit (8,9), so as to cut off the electric power supply (15) to the boiler heating means (2) in the absence of liquid.

FIG.1

The present invention relates to a liquid level sensing device for steam boilers, in particular for irons.

As is known, small steam-operated household appliances, such as irons and the like, have a boiler provided with heating means, generally constituted by an electric resistor. In the use of these devices, there is the risk of switching them on without the boiler being sufficiently filled with water.

In order to obviate this risk, conventional boilers usually have thermostat means intended to check the temperature of the heating means. Switching the device on with no water causes an increase in the temperature of the heating means which, by being detected by the thermostat, causes the activation of alarm means, for example a warning light.

This solution, however, entails considerable thermal drifts affecting the heating means, with the consequence of a rapid deterioration of said heating elements.

The aim of the present invention is to solve the above problem by providing a sensing device which allows to detect the level of the liquid inside the steam boiler and to intervene if said level reaches a safety limit or safety level defined above the heating means.

Within the scope of this aim, a further object of the present invention is to provide a liquid level sensing device for steam boilers which is simple in concept, is safely reliable in operation and versatile in use.

This aim and this object are both achieved, according to the invention, by the present liquid level sensing device for steam boilers, which is characterized in that it comprises a metallic probe which is arranged inside the boiler above the heating means of said boiler and is intended to be immersed in the liquid contained in the boiler, an electric circuit connected at its ends to said probe and to the structure of said boiler and suitable for being closed across the liquid contained in the boiler, control means inserted in said electric circuit which are adapted to generate a signal which is transmitted to said probe and can be detected by said control means upon the opening of said circuit, so as to interrupt the electric power supply to said heating means of the boiler in the absence of liquid.

Further characteristics and advantages of the invention will become apparent from the detailed description of a preferred embodiment of the liquid level sensing device for steam boilers, illustrated only by way of non-limitative example in the accompanying drawings, wherein:

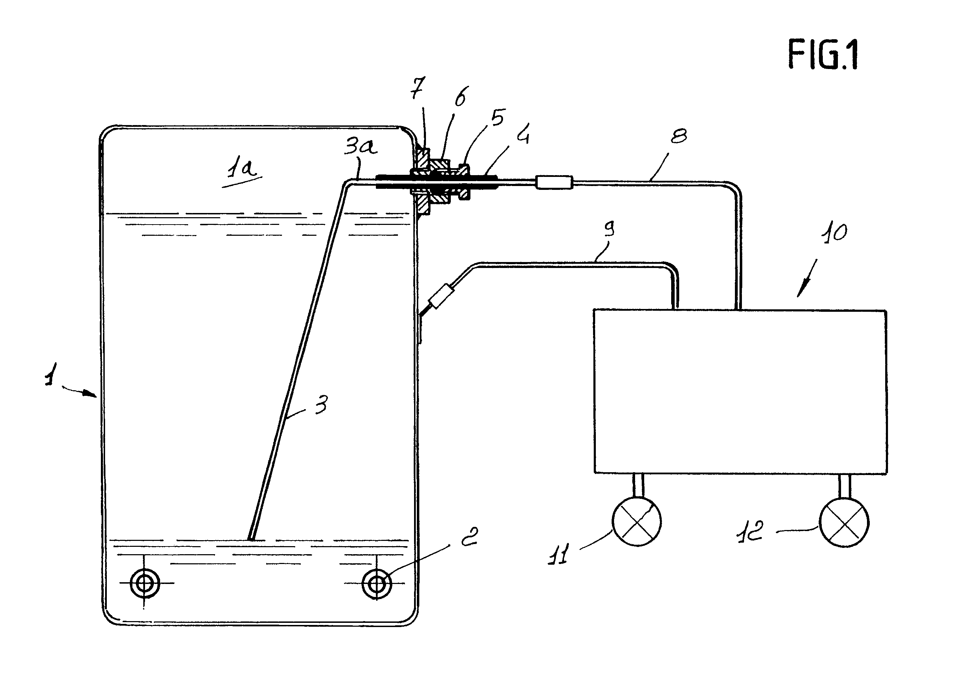

figure 1 is a sectional elevation view of a steam boiler provided with the liquid level sensing device according to the invention;

figure 2 is an electric diagram of control means.

With reference to the above figures, the reference numeral 1 indicates the boiler of a steam iron. The boiler 1 is mounted on a side of the appliance and is internally provided, proximate to its bottom, with heating means 2 which can be constituted by a conventional electric resistor. The boiler 1 is intended to be filled with tap water for the production of steam.

The liquid level sensing device has a metallic probe 3 arranged inside the boiler 1, above the heating means 2, and immersed in the liquid contained in said boiler.

The probe 3 is constituted by a metallic stem which extends downward starting from a lateral wall of the boiler 1 and is slightly inclined. The probe 3 protrudes from the boiler with a horizontally bent portion 3a which is guided in a sheath 4 made of insulating material such as Teflon. The sheath 4 is secured on the probe by appropriate securing means such as a ring 5 which is screwed in a bush 6; the bush 6 is in turn screwed in a threaded ring 7 which is welded to the wall of the boiler at a hole defined in the upper part of said wall, in practice at the level of the steam chamber 1a of the boiler.

The probe 3 is inserted in an electric circuit which comprises a pair of conductors 8 and 9. The conductor 8 constitutes in practice a continuation of the portion 3a of the probe; the conductor 9 is connected, at one end, to the outer wall of the boiler 1.

Electronic control means, generally indicated by 10, are arranged between the conductors 8 and 9 and are mounted on an appropriate board. The control means 10 control the activation of a warning light 11 and of an acoustic warning 12 which are intended to be energized when the level of the liquid reaches a preset minimum level.

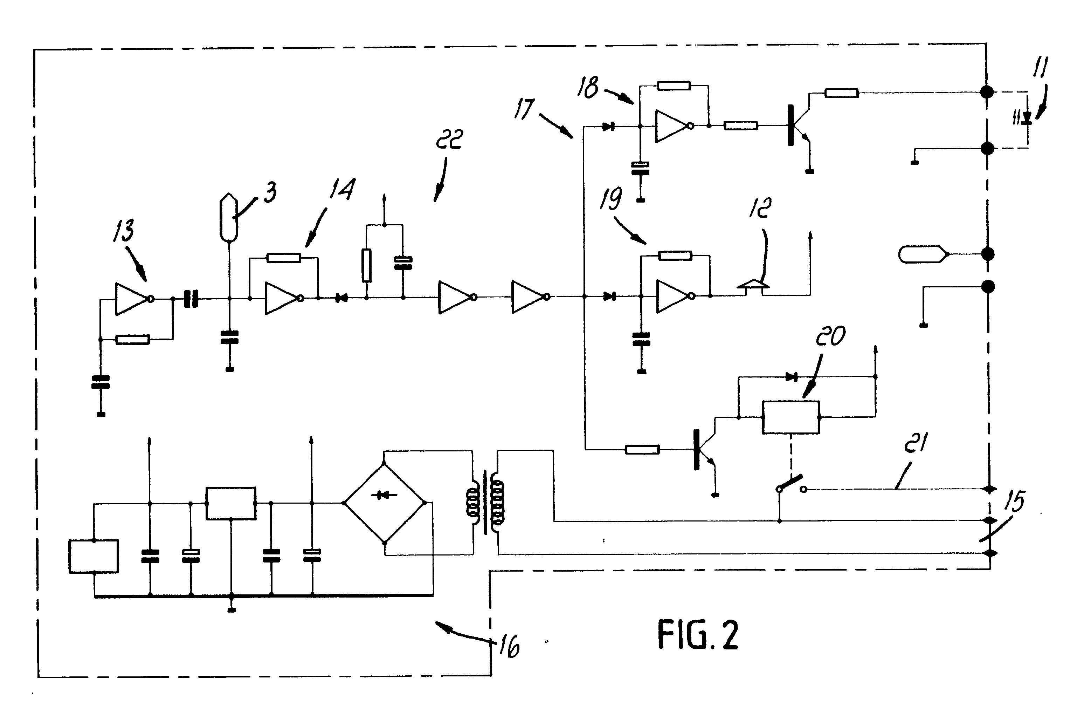

The control means 10, which are illustrated in detail in figure 2, have an oscillator stage 13 which is suitable for generating a square wave at the frequency of 100 Hz; the oscillator is connected to the probe 3 and to a sensor stage 14. The control means are powered by the electric line 15 by means of a transformer device 16 provided with appropriate stabilizer means.

The signal is transmitted from the sensor stage 14 to a driver stage 17. The driver stage 17 is suitable for activating the warning light 11 and the acoustic warning 12 by means of respective oscillators 18, 19, as well as a relay element 20 which is suitable for cutting off the electric power supply to the line 21 which is connected to the heating means 2.

The signal sent to the driver stage 17 passes through a delay stage 22 which has the function of eliminating any rebounds on the relay 20.

In practice, when the probe 3 is immersed in the liquid, a closed circuit is produced between said probe and the wall of the boiler; therefore the signal generated by the oscillator 13 does not reach the sensor stage 14. In this condition, the relay 20 is energized, so as to allow the supply of electric power to the heating means 2.

Instead, when the probe 3 is not in contact with the liquid, the circuit is opened, allowing the signal to reach the sensor stage 14 of the control means 10. In this condition, the relay 20 is de-energized, so as to interrupt the electric power supply to the heating means 2 of the boiler. simultaneously, the driver stage 17 activates the warning light 11 and the acoustic warning 12, so as to indicate the absence of liquid.

To conclude, the described device allows to check the level of the liquid inside the steam boiler and to intervene, cutting off the electric power supply to the heating means, if said level reaches a safety limit. Said safety level can be conveniently preset in fitting the probe inside the boiler, keeping it in any case adequately above the heating means.

The fact should be stressed that the extension of the probe 3 downwardly, starting from the steam chamber of the boiler, prevents any calcareous deposits from grounding said probe, which would thereby prevent the operation of the device. The fitting of the probe on the lateral wall of the boiler prevents problems of space occupation on the upper surface of said boiler, where other elements of the device are usually provided.

In the practical embodiment of the invention, the materials employed, as well as the shape and dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Liquid level sensing device for steam boilers, characterized in that it comprises a metallic probe (3) arranged inside the boiler (1) above heating means (2) of said boiler and intended to be immersed in the liquid contained in the boiler, an electric circuit (8,9) which is connected, at its ends, to said probe and to the structure of said boiler (1) and is suitable for being closed across the liquid contained in said boiler, control means (10) which are inserted in said electric circuit and are suitable for generating a signal which is sent to said probe (3) and can be detected by said control means upon the opening of said circuit, so as to cut off the supply of electric power to said boiler heating means (2) in the absence of liquid.

2. Device according to claim 1, characterized in that said probe (3) is constituted by a metallic stem which extends downward from above starting from the upper part of a lateral wall of said boiler (1)

3. Device according to claim 1, characterized in that said control means (10) have an oscillator stage (13) which is suitable for generating a signal which is sent to said probe (3), a stage (14) for detecting the signal generated by said oscillator stage, a driver stage (17) which is suitable for receiving the signal detected by said sensor stage (14) and for activating a relay element (20) intended to cut off the electric power supply (15) to said heating means in the absence of liquid.

4. Device according to claim 3, characterized in that said driver stage (17) is suitable for activating a warning light (11) and an acoustic warning device (12) in the absence of liquid.

5. Device according to claim 3, characterized in that said signal sent to the driver stage (17) passes through a delay (22) stage suitable for eliminating rebounds on said relay (20).

6. Device according to claim 1, characterized in that said probe (3) protrudes laterally from said boiler (1) with a portion (3a) which is guided in a sheath (4) made of insulating material, said sheath (4) being secured on the probe (3a) by a ring (5) which screws in a bush (6) which is in turn screwed in a threaded ring (7) which is welded to the wall of the boiler (1) at a hole defined in the upper part of said wall, at the level of the steam chamber (1a) of the boiler.

FIG.1

EP 0 449 112 A1

FIG.2

## DOCUMENTS CONSIDERED TO BE RELEVANT

EP 91104421.2

| Category | Citation of document with indication, where appropriate, of relevant passages | Relevant to claim | CLASSIFICATION OF THE APPLICATION (Int. Cl.5) |
|---|---|---|---|
| X | <u>AT - B - 383 677</u> (KESSEL-LOOS) <br> * Fig. 3; page 3, lines 14-24 * | 1,2,4 | G 01 F 23/24 |
| A | | 3 | |
| X | <u>GB - A - 2 166 870</u> (LOIACONO) <br> * Abstract; fig. 1; page 2, lines 16-92 * | 1,2,4, 6 | |
| X | <u>US - A - 3 834 357</u> (KACZMAREK) <br> * Abstract; column 1, lines 6-17; claims 1,8 * | 1 | |
| A | | 4 | |
| A | <u>GB - A - 2 180 939</u> (PARTRIDGE) <br> * Abstract; page 1, lines 59-61 * | 1-3 | |
| A | <u>GB - A - 1 498 399</u> (ITT) <br> * Page 1, lines 16-28; page 2, lines 10-124 * | 1,5 | TECHNICAL FIELDS SEARCHED (Int. Cl.5) <br><br> G 01 F <br> G 05 D |
| A | <u>US - A - 4 547 768</u> (KULHAVY) <br> * Abstract; page 5, lines 3-40 * | 1,3,4 | |

The present search report has been drawn up for all claims

| Place of search | Date of completion of the search | Examiner |
|---|---|---|
| VIENNA | 11-07-1991 | NASSRI |

EPO FORM 1503 03.82 (P0401)